# EUROPÄISCHE PATENTSCHRIFT

(11) **EP 2 980 477 B1**
(45) Veröffentlichungstag und Bekanntmachung des Hinweises auf die Patenterteilung: **27.06.2018**
(21) Anmeldenummer: 15177521.0
(22) Anmeldetag: 20.07.2015
(51) Int. Cl.: F23D 1/04, F23G 5/00, F23G 5/20, F23K 3/02, F23D 1/00

(54) **MEHRSTOFFBRENNER UND VERFAHREN ZUM BEHEIZEN EINES OFENRAUMS**
MULTI-FUEL BURNER AND METHOD FOR HEATING AN OVEN
BRÛLEUR MULTI-COMBUSTIBLES ET PROCÉDÉ DE CHAUFFAGE D'UN FOUR

(30) Priorität: 02.08.2014 DE 102014011567
(43) Veröffentlichungstag der Anmeldung: 03.02.2016
(73) Patentinhaber: Messer Austria GmbH, 2352 Gumpoldskirchen (AT)
(72) Erfinder: Demuth, Martin, 2352 Gumpoldskirchen (AT); Rauch, Johannes, 8074 Raaba (AT)
(74) Vertreter: Münzel, Joachim R.

(56) Entgegenhaltungen:
- DE-A1- 10 133 058
- DE-A1-102010 061 496
- US-A- 4 221 174

## Beschreibung

Die Erfindung betrifft einen Mehrstoffbrenner, mit einer Zuführung für einen Primärbrennstoff und einer Zuführung für ein primäres Oxidationsmittel sowie wenigstens einer Sekundärbrennstoffzuführung, die in einen Ofenraum ausmünden, und mit einer in wenigstens einer Sekundärbrennstoffzuführung für einen stückigen oder pulverförmigen Brennstoff, der mit Hilfe eines Fördermediums durch die Sekundärbrennstoffzuführung gefördert und am Brennermund in den Ofenraum ausgetragen wird, angeordneten, an eine Sauerstoffzuleitung angeschlossene Mischeinrichtung zum Einmischen eines sauerstoffreichen Gases in den durch die Sekundärbrennstoffzuführung geförderten Sekundärbrennstoffstrom. Die Erfindung betrifft des Weiteren ein Verfahren zum Beheizen eines Ofenraums.

Derartige Mehrstoffbrenner kommen insbesondere in Drehrohröfen, beispielsweise in Drehrohröfen zur Zementherstellung oder zur thermischen Abfallverwertung zum Einsatz. Sie ermöglichen insbesondere die Verwendung von Brennstoffen unterschiedlichen Heizwerts bei der Verbrennung. So wird beispielsweise unter Verwendung eines derartigen Brenners Zementklinker im Drehrohrofen auf eine Temperatur von ca. 1.450°C und mehr erhitzt, wofür eine Primärflammentemperatur von ca. 2.000°C erforderlich ist. Der aus dem Drehrohr ausgetragene Klinker wird anschließend durch Luftzufuhr in Kühlern weiter abgekühlt, wobei die heiße Kühlerluft häufig als Sekundär- oder Tertiärluft zur Feuerung im Drehrohrofen verwendet und koaxial zum Brennerkopf eingebracht wird.

Die Klinkerherstellung ist ein sehr energieintensiver Prozess. Die Erzeugung von einer Tonne Klinker bedingt einen spezifischen Wärmeverbrauch von rund 3.500 MJ. Zur Bereitstellung dieser Energie kommen heute zunehmend neben hochkalorischen Brennstoffen (hier definiert mit einem Heizwert von mehr als 10 kWh/m³ bei gasförmigen bzw. 30 MJ/kg bei festen oder flüssigen Brennstoffen) niederkalorische Brennstoffe als ergänzende Brennstoffe ("Ersatzbrennstoffe") zum Einsatz, die einem Heizwert von weniger als 30 MJ/kg besitzen. Beispiele für niederkalorische Brennstoffe sind Gasgemische, wie beispielsweise Stadtgas oder Grubengas, aus Abfall gewonnene feste oder flüssige Brennstoffe, wie beispielsweise Lösemittelreste, Reifen- und Altholzschnitzel, Klärschlamm, Spuckstoffe, Schreddermaterial aus der Kunststoffverarbeitung oder Tiermehl bis hin zur aufbereitetem Abfall aus Haushalten, Industrie- und Gewerbebetrieben, oder Brennstoffe, die aus nachwachsenden Rohstoffen gewonnen werden, wie Biogas, Pflanzenöle oder Holz. Derartige Ersatzbrennstoffe werden entweder durch geeignete Öffnungen direkt in den Ofenraum eingebracht oder, gegebenenfalls zerkleinert, gleichzeitig mit einem Primärbrennstoff über einen einem entsprechend ausgelegten Mehrstoffbrenner zugeführt. Auch können mehrere unterschiedliche Sekundärbrennstoffe, auch in unterschiedlichen Aggregatzuständen, parallel zum Einsatz kommen. Beim Einsatz von Sekundärbrennstoffen muss insbesondere gewährleistet sein, dass die Qualität und die Gleichmäßigkeit des Produktes sowie die Sicherheit der Prozessführung nicht beeinträchtigt wird.

Mehrstoffbrenner der eingangs genannten Art sind beispielsweise aus der DE 10 2010 061 496 A1 und der EP 2 626 659 A1 bekannt. Sie umfassen mehrere separate Zuführungen für ein primäres Oxidationsmittel, einen ersten (oder "primären") Brennstoff sowie Zuführungen für mindestens einen weiteren Brennstoff ("sekundäre Brennstoffe"), insbesondere für Ersatzbrennstoffe. Die Zuführungen sind dabei entweder als Ringkanäle ausgebildet oder erstrecken sich in Form von parallel zueinander angeordneten Rohren durch den Brennerkopf hindurch. Als primäres Oxidationsmittel kommt in der Regel Luft ("Primärluft") zum Einsatz. Ein sekundäres Oxidationsmittel ("Sekundärluft") wird über separate Zuführungen außerhalb des Brenners unmittelbar in den Ofenraum eingegeben. Um im Falle des Einsatzes eines Gemisches aus einem hochkalorischen Brennstoff und einem Ersatzbrennstoff als Primärbrennstoff ein mit dem Einsatz eines reinen hochkalorischen Brennstoffs vergleichbares Temperaturprofil zu erzielen, können die Brenner mit verstellbaren Düsen bzw. Kanälen und hohen Primärluftimpulsen ausgerüstet werden. Durch eine Verdrallung der Primärluft werden zudem eine frühzeitige Vermischung der heißen Sekundärluft mit dem primären Brennstoff und eine gezielte Einstellung der Flammenform ermöglicht.

Aufgrund betriebswirtschaftlicher Erwägungen geht der Trend in der Zementindustrie zu einem immer stärkeren Einsatz von niederkalorischen Brennstoffen bzw. Ersatzbrennstoffen. Ein erhöhter Anteil von Ersatzbrennstoffen im Primärbrennstoff, insbesondere bei Einsatz von Festbrennstoffen, führt jedoch zu Problemen mit dem Ofenbetrieb und der Klinkerqualität. Da Ersatzbrennstoffe, wie beispielsweise geschredderte Kunststoffe, aus technischen und betriebswirtschaftlichen Gründen nur bis Korngrößen von ca. 10 bis 20 mm Durchmesser aufbereitet werden, besitzen sie ein deutlich schlechteres Flug- und Ausbrandverhalten als beispielsweise eine fein gemahlene Kohle. Gleichzeitig beinhalten diese Materialien unterschiedlichste Inhaltsstoffe und Feuchtegehalte, und die Korngrößenverteilung erstreckt sich über ein weites Kornband. Dies führt dazu, dass insbesondere große, schwere und unregelmäßig geformte Partikel vor ihrer vollständigen Umsetzung auf das Klinkerbett fallen und dort chemische Reaktionen mit dem Aufgabestoff auslösen. Insbesondere kommt es im Klinkerbett zu einer Reduktion von Fe₂O₃ zu FeO, die wiederum in der Verfärbung des Klinkers und in einer verminderten Klinkerqualität resultiert. Das schlechte Ausbrandverhalten verschiebt auch die Temperaturverteilung der Flamme vom Brennermund weg und verringert die damit erreichbaren Spitzentemperaturen, welche zum Brennen des Materials notwendig sind.

Es existieren diverse Ansätze, die Umsetzung des Ersatzbrennstoffs zu verbessern. Beispielsweise stellen Belüftung und Verdrallung des Brennstoffs vor dem Austritt aus dem eigentlichen Brennstoffkanal Ansätze dar, um die Flugeigenschaften des Brennstoffs zu verbessern. Die Erhöhung der Transportluftmenge für den Ersatzbrennstoff bewirkt ebenfalls eine längere Flugphase des gesamten Brennstoffs, sorgt jedoch gleichzeitig dafür, dass der Brennstoff zu schnell aus dem heißen Brennernahbereich getragen wird. Zudem bewirken hohe Geschwindigkeiten in den Ersatzbrennstoffkanälen einen erhöhten Verschleiß und einen unerwünschten Kühleffekt, da die Transportluft üblicherweise Umgebungstemperatur besitzt.

Ein weiterer Ansatz besteht darin, Sauerstoff über Lanzen in den Ofenraum einzutragen, um die Verbrennung im Ofenraum zu fördern. Wesentlich für ein gutes Prozessergebnis ist dabei eine gute Vermischung von Sekundärbrennstoff und Oxidationsmittel im Ofenraum. Es hat sich jedoch herausgestellt, dass bei ungünstigen Strömungsverhältnissen innerhalb des Ofenraums Sauerstoff, der über eine Sauerstofflanze in den Ofenraum eingetragen wird, aus dem Wirkbereich herausgesogen wird und nicht im vollem Umfang zur Verbrennung des eingetragen Ersatzbrennstoffs zur Verfügung steht.

In der EP 2 626 659 A1 wird vorgeschlagen, Sauerstoff in den Sekundärbrennstoffstrom eines Mehrstoffbrenners einzuleiten. Die Einleitung erfolgt dabei über eine geringe Anzahl von spitzwinklig in die Sekundärbrennstoffzuführung einmündenden Eintragsdüsen, die gleichmäßig um den Umfang der Sekundärbrennstoffzuführung angeordnet sind. Sauerstoff und Brennstoff werden so in im wesentlichen parallel zueinander verlaufenden Strömen in den Ofenraum hinein ausgetragen, wobei sich die Ströme bereits in der Brennstoffzuleitung teilweise vermischen.

Die in dieser Druckschrift beschriebene Vorrichtung weist jedoch den Nachteil auf, dass der konzentrierte Eintrag von Sauerstoff in die Sekundärbrennstoffzuführung zu einer Überkonzentration von Sauerstoff stromab zur Eintragsstelle und damit zum Entstehen zündgefährlicher Zonen führt. Kommt es in der Folge zur Zündung des Sekundärbrennstoffs bereits in der Sekundärbrennstoffzuführung, ist es erforderlich, die Sekundärbrennstoffzuführung mit einem Inertgas zu fluten, was eine Unterbrechung des regulären Verbrennungsprozess mit sich zieht. Zudem besteht die Gefahr, dass während einer Betriebspause Brennstoffpartikel in die Sauerstoffzuleitungen gelangen und diese verstopfen, wodurch eine aufwändige Reinigung notwendig wird.

Die DE 101 33 058 A1 betrifft einen innenmischenden Brenner, der insbesondere zum Einbau in einen Drehrohrofen bestimmt ist. Wesentlich für diesen Brennertyp ist, dass lediglich eine einzige Zuführung existiert, durch die hindurch sämtliche Brennstoffe und Oxidationsmittel in den Ofenraum eingetragen werden. Demzufolge entsteht noch innerhalb des Brenners ein hochentzündliches Gemisch, dessen vorzeitige Zündung bzw. Flammenbildung nur durch die hohe Ausstoßgeschwindigkeit des Brennstoff-Oxidationsmittelgemisches verhindert wird.

Aus der US 4 221 174 A1 ist ein Zündmechanismus für einen Brenner für einen Kohlestaub bekannt. Der Brenner besitzt ein zentrales Zuführungsrohr für Kohlestaub, das innerhalb einer Zuführung für Sekundärluft angeordnet ist. Über eine Zuführung wird ein Gas, bei dem es sich beispielsweise um Luft oder Sauerstoff handelt, in Form von Gaspulsen in die Zuführung für Kohlestaub eingespeist.

Ziel ist dabei, am Ausgang des Brenners zumindest zeitweise bzw. periodisch ein Verhältnis aus Sauerstoff und Brennstoff zu erzeugen, bei dem der Brennstoff erfolgreich gezündet werden kann. Diese Anordnung ist allerdings nicht geeignet, die Verbrennung von niederkalorischen Ersatzbrennstoffen im Ofenraum zu verbessern.

Der Erfindung liegt somit die Aufgabe zugrunde, die Zuverlässigkeit beim Betrieb eines Mehrstoffbrenners der eingangs genannten Art und Zweckbestimmung zu erhöhen und insbesondere die Gefahr des Auftretens der genannten Störungen zu minimieren.

Gelöst ist diese Aufgabe durch einen Mehrstoffbrenner mit den Merkmalen des Patentanspruchs 1 und durch ein Verfahren mit den Merkmalen des Patentanspruchs 8. Vorteilhafte Ausgestaltungen der Erfindung sind in den Unteransprüchen angegeben.

Der erfindungsgemäße Mehrstoffbrenner ist also dadurch gekennzeichnet, dass die Mischeinrichtung einen von einer Vielzahl von Gasaustrittsöffnungen durchbrochenen Wandabschnitt der Sekundärbrennstoffzuführung umfasst, die über einen Gasverteiler mit der Sauerstoffzuleitung strömungsverbunden sind.

Durch den Gasverteiler wird das aus der Sauerstoffzuleitung einströmende sauerstoffreiche Gas möglichst gleichmäßig auf die Gasaustrittsöffnungen im Wandabschnitt der Sekundärbrennstoffzuführung (nachfolgend auch: "perforierter Wandabschnitt" genannt) verteilt. Die Gasaustrittsöffnungen, sind dabei eng benachbart zueinander im perforierten Wandabschnitt angeordnet und bilden auf diese Weise einen flächigen Eintragsbereich, innerhalb dessen das sauerstoffreiche Gas in den Sekundärbrennstoffstrom eingetragen wird. Beispielsweise befinden sich im perforierten Wandabschnitt 20 bis 100 Gasaustrittsöffnungen mit einem Durchmesser von jeweils 1 cm bis 5 cm und einem Abstand voneinander von jeweils 2 cm bis 10 cm. Der perforierte Wandabschnitt ist beispielsweise nach Art eines Lochblechs ausgeführt; beispielsweise weist er ein Feld von in gleichen Abständen zueinander angeordneten oder mehrere aufeinanderfolgende Reihen nebeneinander angeordneter Gasaustrittsöffnungen auf. Bei einem im wesentlichen horizontalen Verlauf der Sekundärbrennstoffzuführung befinden sich die Gasaustrittsöffnungen bevorzugt nur in deren - geodätisch gesehen - oberen Bereich, um eine Verstopfung von Gasaustrittsöffnungen durch Sekundärbrennstoff zu vermeiden, der während Betriebspausen in den unteren Bereich der Sekundärbrennstoffzuführung absinkt.

Durch die Vielzahl an Gasaustrittsöffnungen findet nur ein vergleichsweiser sanfter Eintrag des Sauerstoffs in den Sekundärbrennstoffstrom statt, wodurch die Gefahr der Entstehung lokaler Sauerstoff-Überkonzentrationen - gegenüber dem konzentrierten Eintrag von Sauerstoff an lediglich einem Eintragsrohr oder einer geringen Anzahl von Eintragsrohren - erheblich reduziert ist. Der mit den Gasaustrittsöffnungen ausgerüstete Wandabschnitt der Sekundärbrennstoffzuführung ist bevorzugt beabstandet von der Mündungsöffnung des Brenners angeordnet, um eine möglichst gute Durchmischung des eingetragenen Sauerstoffs mit dem Sekundärbrennstoffstrom vor dessen Austritt an der Mündungsöffnung des Brenners zu gewährleisen. Das sauerstoffreiche Gas strömt im wesentlichen senkrecht zur Strömungsrichtung des Sekundärbrennstoffstroms in die Sekundärbrennstoffzuführung ein, wodurch es zur Ausbildung turbulenter Strömungen in der Sekundärbrennstoffzuführung kommt, die die innige Durchmischung von Sekundärbrennstoff mit dem sauerstoffreichen Gas fördern.

Als "sauerstoffreiches Gas" soll hier allgemein ein Gas mit einem höheren Sauerstoffanteil als Luft verstanden werden, insbesondere ein Gas mit einem Sauerstoffgehalt von mehr als 22 Vol.-%, bevorzugt ein Gas mit einem Sauerstoffgehalt von mehr als 50 Vol.-%, weiter bevorzugt mit einem Sauerstoffgehalt von mehr als 95 Vol.-%, besonders bevorzugt mit einem Sauerstoffgehalt von mehr als 99 Vol.-%. Als Sekundärbrennstoff kommt beim erfindungsgemäßen Brenner bevorzugt ein stückiger oder pulverförmiger Brennstoff zum Einsatz, der mit Hilfe eines Fördermediums, bei der es sich insbesondere um Luft handelt, durch die Sekundärbrennstoffzuführung gefördert und am Brennermund in den Ofenraum ausgetragen wird. Der Sekundärbrennstoffstrom kann jedoch auch insbesondere Spuckstoffe, getrocknete hoch- und niederkalorische biologische Abfälle, Klärschlamm und/oder Tiermehl enthalten oder aus mehreren dieser Stoffe bestehen. Zur weiteren Stabilisierung des in den Ofen ausgetragenen Sekundärbrennstoffstroms kann die Sekundärbrennstoffzuführung im Übrigen auch mit einer Verdrallungseinrichtung ausgerüstet sein. Der erfindungsgemäße Brenner eignet sich insbesondere für den Einsatz in einem Drehrohrofen, beispielsweise einem Drehrohrofen, der der Kalk- oder Zementherstellung oder der thermischen Abfallverwertung dient.

Eine bevorzugte Ausgestaltung der Erfindung sieht vor, dass die Mischeinrichtung ein mit einem Anschluss für die Sauerstoffleitung ausgerüstetes doppelwandig ausgeführtes Rohrstück der Sekundärbrennstoffzuführung umfasst, dessen innere Wand eine dem Innendurchmesser der Sekundärbrennstoffzuführung angepassten Innendurchmesser aufweist und in einem geodätisch oben angeordneten Bereich mit einem perforierten Wandabschnitt mit einer Vielzahl von vorzugsweise in gleichen Abständen voneinander angeordneten Gasaustrittsöffnungen ausgerüstet ist. Die doppelwandige Ausführung des Rohrstücks stellt einen baulich einfach zu realisierenden Gasverteiler dar, der das sauerstoffreiche Gas weitgehend gleichmäßig auf die Vielzahl der Gasaustrittsöffnungen verteilt. Aufgrund der Anordnung des perforierten Wandabschnitts innerhalb der geodätisch oberen Hälfte der Sekundärbrennstoffzuführung wird gewährleistet, dass im Falle einer Betriebspause keine Gasaustrittsöffnungen durch Sekundärbrennstoff verstopft werden. Es erübrigt sich somit, für Betriebspausen einen "Stand-by-Modus" vorzusehen, währenddessen die Mischeinrichtung permanent mit einem gasförmigen Medium, beispielsweise Luft gespült wird. Der Gasverteiler kann im Übrigen auch als ein an seinen beiden Stirnseiten mit Befestigungsflanschen ausgerüstetes Rohrstück ausgebildet sein, um einen leichten Einbau und Austausch zu ermöglichen.

Bevorzugt umfasst der perforierte Wandabschnitt eine Anzahl von mindestens 20, bevorzugt über 40 Gasaustrittsöffnungen. Die Gesamtmenge an zugeführtem sauerstoffreichem Gas, die beispielsweise zwischen 5% und 30% der Menge an Förderluft in der Sekundärbrennstoffzuführung umfasst, wird so auf eine große Anzahl an Gasaustrittsöffnungen verteilt. Dadurch wird gewährleistet, dass das sauerstoffreiche Gas in Form einer entsprechenden Anzahl feiner Gasstrahlen in den Sekundärbrennstoffstrom eingetragen wird und es nicht zu großvolumigen zündgefährdeten Zonen mit Sauerstoffüberkonzentration kommt.

Zweckmäßigerweise ist die Mischeinrichtung mit einer Inertgaszuleitung zum Einleiten eines Inertgases strömungsverbunden. Dadurch besteht die Möglichkeit, im Falle einer dennoch erfolgenden Zündung in der Sekundärbrennstoffzuführung Inertgas einzuleiten und die thermische Reaktion zu ersticken.

Um zu vermeiden, dass im Falle eines plötzlichen Stopps der Förderung des sauerstoffreichen Gases Sekundärbrennstoff oder verunreinigte Förderluft in den Gasverteiler und die Sauerstoffzuleitung eindringt, ist vorteilhafterweise die Sauerstoffleitung und - falls vorhanden - die Inertgasleitung mit einem Rückschlagventil ausgerüstet.

Eine abermals bevorzugte Ausführungsform der Erfindung sieht vor, dass in der Sekundärbrennstoffzuführung, stromab zur Mischeinrichtung, eine Einrichtung zur Temperaturerfassung, und in der Sauerstoffzuführung und/oder der Inertgaszuführung und/oder der Sekundärbrennstoffzuführung jeweils Ventile vorgesehen sind, wobei die Einrichtung zur Temperaturerfassung und die Ventile mit einer Steuereinheit in Datenverbindung stehen, mittels der die Ventile in Abhängigkeit vom gemessenen Temperaturwert angesteuert werden können. Auf diese Weise kann im Falle einer plötzlichen Temperaturerhöhung in der Sekundärbrennstoffzuführung, die auf eine unerwünschte thermische Reaktion schließen lässt, automatisch Inertgas zugeführt und die thermische Reaktion zum Erliegen gebracht werden.

Um eine möglichst gute Durchmischung des zugeführten sauerstoffreichen Gases in den Sekundärbrennstoffstrom zu gewährleisten, empfiehlt es sich, dass in der Sekundärbrennstoffzuführung, stromab zu dem die Gasaustrittsöffnungen aufweisenden Wandabschnitt, eine Mischstrecke vorhanden ist. Die Länge der Mischstrecke beträgt dabei bevorzugt zwischen dem Vierzigfachen und dem Hundertfachen des Durchmessers der jeweiligen Sekundärbrennstoffzuführung.

Die Aufgabe der Erfindung wird auch mit einem Verfahren zum Beheizen eines Ofenraums gelöst, bei dem ein Strom eines primären Oxidationsmittels und ein Primärbrennstoffstrom sowie wenigstens ein Sekundärbrennstoffstrom über eine Sekundärbrennstoffzuführung in einen Ofenraum eingetragen und dort in einer primären Flamme verbrannt werden, wobei der durch wenigstens eine Sekundärbrennstoffzuführung geleitete Sekundärbrennstoffstrom vor seiner Zuführung in den Ofenraum mit einem Strom eines sauerstoffreichen Gases beaufschlagt wird, wobei das Verfahren erfindungsgemäß dadurch gekennzeichnet ist, dass das sauerstoffreiche Gas über eine Vielzahl von Gasaustrittsöffnungen, die in einem perforierten Wandabschnitt der Sekundärbrennstoffzuführung angeordnet sind, gleichmäßig in den Sekundärbrennstoffstrom eingetragen wird.

Zweckmäßigerweise wird das sauerstoffreiche Gas durch den perforierten Wandabschnitt in der Sekundärbrennstoffzuführung mit einem Überdruck zwischen 10 mbar und 200 mbar, bevorzugt zwischen 50 mbar und 100 mbar in den Sekundärbrennstoffstrom eingetragen. Das Verhältnis der Strömungsgeschwindigkeiten von Sekundärbrennstoffstrom und sauerstoffreichem Gas am Ort des Eintrages liegt zwischen 0,5 und 2. Durch diesen vergleichsweise geringen Überdruck und die vergleichsweise geringe Eintragsgeschwindigkeit des Sauerstoffs wird der Sauerstoffstrom vergleichsweise "sanft" in den Sekundärbrennstoffstrom eingetragen, d.h. es findet keine starke Verdrängung des Sekundärbrennstoffstroms stromab zur Eintragsstelle des sauerstoffreichen Gases statt, die zu einer Überkonzentration von Sauerstoff und damit zur Ausbildung zündgefährlicher Zonen im Sekundärbrennstoffstrom führen könnte. Vielmehr kommt es zu einer Vermischung beider Medien zunächst am Rand des Sekundärbrennstoffstroms, die sich aufgrund der durch die im wesentlichen senkrecht zum Sekundärbrennstoffstrom verlaufende Eintragsrichtung des sauerstoffreichen Gases induzierten Turbulenzen auf der verbleibenden Mischstrecke bis zum Brennermund nach innen hinein fortsetzt.

Der erfindungsgemäße Brenner und das erfindungsgemäße Verfahren ist insbesondere für die Verwendung von granulierten Kunststoffabfällen, Spuckstoffen, getrockneten hoch- und niederkalorischen biologischen Abfällen, Klärschlamm und/oder Tiermehl als Sekundärbrennstoff geeignet.

Anhand der Zeichnungen wird ein Ausführungsbeispiel des erfindungsgemäßen Verfahrens näher erläutert. In schematischen Ansichten zeigen:

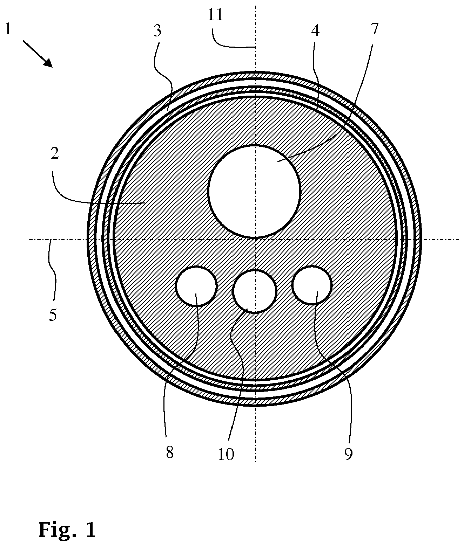

- Fig. 1:: Einen erfindungsgemäßen Brenner in einer Frontansicht,
- Fig. 2:: Einen Drehrohrofen mit einem erfindungsgemäßen Brenner im Längsschnitt,
- Fig. 3:: Die Mischeinrichtung eines erfindungsgemäßen Brenners im Längsschnitt.

Das in den Zeichnungen dargestellte Ausführungsbeispiel zeigt einen Mehrstoffbrenner 1 mit mehreren sich durch dessen Brennerkopf 2 hindurch erstreckenden Zuführungen für Brennstoffe und Oxidationsmittel. So dient ein Ringkanal 3 für die Zuführung eines primären Oxidationsmittels und ein radial innenseitig zu diesem angeordneter Ringkanal 4 für die Zuführung eines primären Brennstoffs. Beim primären Oxidationsmittel handelt es sich in der Regel um Luft oder um ein mit Sauerstoff angereichertes Gas mit einem Sauerstoffanteil von 22 Vol-% und darüber. Beim primären Brennstoff handelt es sich in der Regel um einen hochkalorischen Brennstoff wie Erdgas, Öl oder um einen pulversierten Festbrennstoff aus Kohle oder Petrolkoks, jedoch können auch andere Brennstoffe als primäre Brennstoffe eingesetzt werden, beispielsweise Mischungen aus einem hochkalorischen und einem niederkalorischen Brennstoff. Oberhalb der horizontalen Mittelebene 5 des Mehrstoffbrenners 1 ist, innerhalb des Ringkanals 4, eine rohrförmige Sekundärbrennstoffzuführung 7 für einen Ersatzbrennstoff angeordnet, insbesondere für einen sekundären Festbrennstoff, wie beispielsweise Kunststoff-Schreddermaterial, Reifenschnitzel, Altholz oder sonstige partikelförmige Abfallstoffe oder andere, in der Regel niederkalorische, Festbrennstoffe. Des weiteren umfasst der Mehrstoffbrenner 1 rohrförmige Zuführungen 8, 9, 10 die unterhalb der horizontalen Mittelebene 5 des Mehrstoffbrenners 1 angeordnet sind und der Zuführung weiterer gasförmiger, flüssiger oder fester sekundäre Brennstoffe dienen, wie beispielsweise Tiermehl, Lösungsmittel, Altöl, etc. Im Übrigen sind die Ringkanäle 3, 4 und die Zuführungen 7, 8, 9,10 innerhalb des Brennerkopfes zueinander parallel angeordnet.

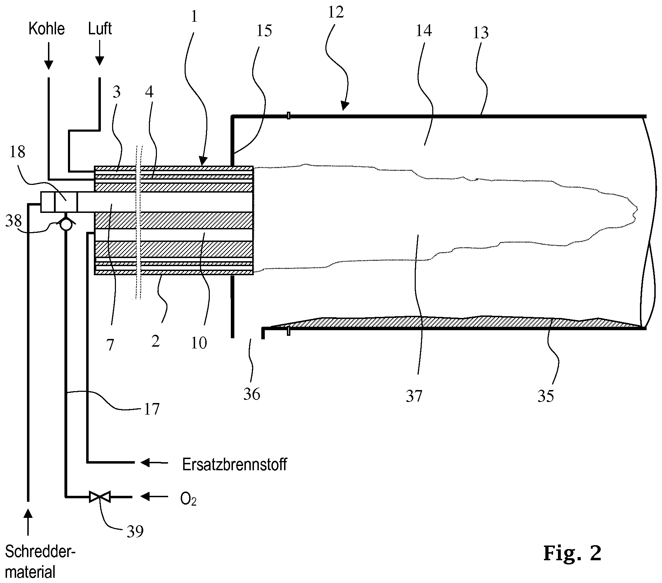

In Fig. 2 ist der Mehrstoffbrenner 1 in seinem Einbauzustand in einem Drehrohrofen 12 gezeigt, wie er beispielsweise zum Herstellen von Zement eingesetzt wird. Der hier nur ausschnittsweise dargestellte Drehrohrofen 12 umfasst einen innerhalb einer drehbar gelagerten Trommel 13 ausgerüsteten Ofenraum 14, an dessen Stirnseite 15 der Brennerkopf 2 des Mehrstoffbrenners 1 hineinragt. In der Sekundärbrennstoffzuführung 7 des Mehrstoffbrenners 1 ist eine mit einer Sauerstoffzuleitung 17 strömungsverbundene Mischeinrichtung 18 zum Einmischen eines sauerstoffreichen Gases in den Sekundärbrennstoffstrom angeordnet, die im Folgenden näher erläutert wird.

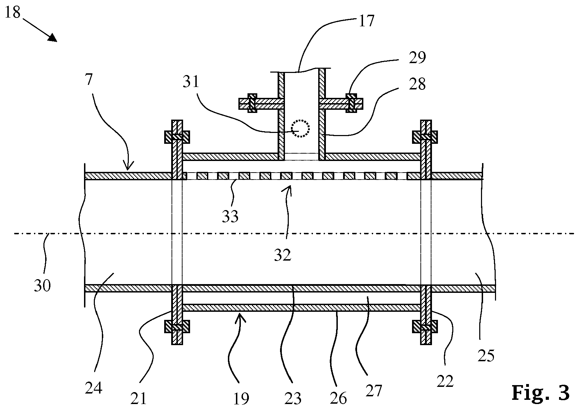

Die in Fig. 3 näher dargestellte Mischeinrichtung 18 umfasst ein doppelwandiges Rohrstück 19, das mittels Flanschverbindungen 21, 22 lösbar in der Sekundärbrennstoffzuführung 7 eingebaut ist. Die innere Wand 23 des Rohstücks 19 besitzt den gleichen Innendurchmesser wird die benachbarten Rohrstücke 24, 25 der Sekundärbrennstoffzuführung 7, während die äußere Wand 26 unter Ausbildung eines ringförmigen Zwischenraums 27 radial beabstandet von der inneren Wand 23 angeordnet ist. Das Rohrstück 19 ist mit einem Anschlussstutzen 28 ausgerüstet, der über eine weitere Flanschverbindung 29 eine Strömungsverbindung mit der Sauerstoffzuleitung 17 herstellt. Weiterhin mündet in den Anschlussstutzen 28 eine Inertgaszuleitung 31 ein. Während die innere Wand 23 unterhalb einer horizontalen Mittelebene 30 der Sekundärbrennstoffzuführung 7 vollständig abgeschlossen ist, ist sie auf einem oberhalb der Mittelebene 30 liegenden Wandabschnitt 32 von einer Vielzahl von Gasaustrittsöffnungen 33 (von denen der Übersichtlichkeit halber in Fig. 3 nur eine mit einem Bezugszeichen markiert ist) durchbrochen, die eine im wesentlichen senkrecht zur Längsachse der Sekundärbrennstoffzuführung 7 verlaufende Strömungsverbindung zwischen dem Zwischenraum 27 und dem Innenraum der Sekundärbrennstoffzuführung 7 herstellen. Die Gasaustrittsöffnungen 33 sind in der inneren Wand 23 in bevorzugt gleichen Abständen voneinander angeordnet; beispielsweise bilden die Gasaustrittsöffnungen 33 ein Feld von *m* Reihen mit jeweils *n* Öffnungen, wobei *m*, *n* ≥ 5, bevorzugt *m*, *n* ≥ 7, ist.

Beim Betrieb des Drehrohrofens 12 wird die Trommel 13 mit Aufgabegut 35 beschickt. Im Anschluss an die thermische Behandlung im Drehrohrofen 12 wird das Aufgabegut 35 über eine Ausgabeöffnung 36 abgeführt. Über den Ringkanal 3 des Mehrstoffbrenners 1 wird das primäre Oxidationsmittel und über den Ringkanal 4 der primäre Brennstoff in den Ofenraum 14 eingebracht. Über hier nicht gezeigte Zuführungen außerhalb des Mehrstoffbrenners 1 wird ein weiteres Oxidationsmittel in den Ofenraum 14 eingetragen, die meist als "Sekundärluft" bezeichnet wird und bei der Klinkererzeugung den größten Teil des insgesamt eingesetzten Oxidationsmittels ausmacht.

Gleichzeitig mit dem Eindüsen des primären Oxidationsmittels und des primären Brennstoffs wird über die Sekundärbrennstoffzuführung 7 ein sekundärer Festbrennstoff, beispielsweise Kunststoff-Schreddermaterial, mit Hilfe eines gasförmigen Fördermediums, wie beispielsweise Luft, in den Ofenraum 14 eingetragen. Gegebenenfalls werden über die Rohre 8, 9 ,10 in an sich bekannter und hier nicht weiter erläuterter Weise weitere sekundäre Brennstoffe eingetragen. Im Ofenraum 14 verbrennen die primären und sekundären Brennstoffe in einer Flamme 37.

Der über die Sekundärbrennstoffzuführung 7 herangeführte Sekundärbrennstoff wird in der Mischeinrichtung 18 mit sauerstoffreichem Gas angereichert. Das sauerstoffreiche Gas wird dazu mit einem geringen Überdruck von beispielsweise 100 mbar gegenüber dem Druck in der Sekundärbrennstoffzuleitung 7 von beispielsweise 200 mbar(ü) aus der Sauerstoffzuleitung 17 zugeführt und strömt in den Zwischenraum 27 ein, der als Gasverteiler wirkt und das sauerstoffreiche Gas gleichmäßig auf die Gasaustrittsöffnungen 33 verteilt. Das sauerstoffreiche Gas tritt anschließend aus den Gasaustrittsöffnungen 33 im wesentlichen senkrecht zur Strömungsrichtung des Sekundärbrennstoffs in die Sekundärbrennstoffzuführung 7 ein und mischt sich mit dem Sekundärbrennstoffstrom. Durch den im wesentlichen senkrechten Eintrag des sauerstoffreichen Gases werden im Sekundärbrennstoffstrom turbulente Strömungen erzeugt, die im weiteren Verlauf die Durchmischung des Sekundärbrennstoffs mit dem sauerstoffreichen Gas begünstigen. Um eine gute Durchmischung zu erzielen, sollte zwischen der Mischeinrichtung 18 und der Ausmündung der Sekundärbrennstoffzuführung 7 in den Ofenraum 4 eine Mischstrecke vorhanden sein, deren Länge mindestens dem Vierzigfachen, bevorzugt dem Hundertfachen des Innendurchmessers der Sekundärbrennstoffzuführung 7 beträgt. Durch den flächigen Eintrag des sauerstoffreichen Gases über die Vielzahl der Gasaustrittsöffnungen 33 im Wandabschnitt 32 wird die Entstehung größerer zündfähiger Bereiche im Sekundärbrennstoffstrom verhindert. Ein Rückschlagventil 38 verhindert, dass im Falle eines plötzlichen Druckanstiegs in der Sekundärbrennstoffzuführung 7 Sekundärbrennstoff in die Sauerstoffzuleitung 17 eindringen kann.

Im Falle einer Betriebspause wird die Sauerstoffzufuhr durch Schließen eines Ventils 39 in der Sauerstoffzuleitung 17 unterbrochen. Soweit sich noch Sekundärbrennstoff in der Sekundärbrennstoffzuführung 7 befindet, sinkt dieser nach unten, kann also die im oberen Bereich des Rohrstücks 19 angeordneten Gasaustrittsöffnungen 33 nicht verschließen. Kommt es in Folge einer Störung zu einem Erliegen des Sekundärbrennstoffstroms in der Sekundärbrennstoffzuführung 7, muss die Versorgung mit sauerstoffreichem Gas unverzüglich unterbrochen werden, da in diesem Fall die Gefahr einer Bildung von Glutnestern im Sekundärbrennstoff besteht. Haben sich in einem solchen Fall bereits Glutnester gebildet, wird die Sekundärbrennstoffzuführung 7 über die Inertgaszuleitung 31 mit einem Inertgas, beispielsweise Stickstoff oder Kohlendioxid, geflutet. Das Vorliegen von Glutnestern kann dabei mittels eines hier nicht gezeigten thermischen Detektors in der Sekundärbrennstoffzuführung 7 festgestellt werden, der mit einer Steuereinrichtung in Datenaustausch steht, mittels der eine Unterbrechung der Versorgung mit sauerstoffreichem Gas und eine Einleitung von Inertgas bei Überschreiten eines vorgegebene Grenzwerts automatisch vorgenommen werden kann.

Mit dem erfindungsgemäßen Mehrstoffbrenner kann die Einsatzmenge an Sekundärbrennstoffen gegenüber konventionellen Mehrstoffbrennern deutlich gesteigert werden. Der Verbrauch an fossilen Brennstoffen wird dadurch reduziert.

### Bezugszeichenliste

- 1.: Mehrstoffbrenner
- 2.: Brennerkopf
- 3.: Ringkanal
- 4.: Ringkanal
- 5.: horizontale Mittelebene
- 6.: -
- 7.: Sekundärbrennstoffzuführung
- 8.: Zuführung
- 9.: Zuführung
- 10.: Zuführung
- 11.: vertikale Mittelebene
- 12.: Drehrohrofen
- 13.: Trommel
- 14.: Ofenraum
- 15.: Stirnseite
- 16.: -
- 17.: Sauerstoffzuleitung
- 18.: Mischeinrichtung
- 19.: Rohrstück
- 20.: -
- 21.: Flanschverbindung
- 22.: Flanschverbindung
- 23.: Innere Wand
- 24.: Rohrstück
- 25.: Rohrstück
- 26.: Äußere Wand
- 27.: Zwischenraum
- 28.: Anschlussstutzen
- 29.: Flanschverbindung
- 30.: Mittelebene
- 31.: Inertgaszuleitung
- 32.: Wandabschnitt
- 33.: Gasaustrittsöffnung
- 34.: -
- 35.: Aufgabegut
- 36.: Aufgabeöffnung
- 37.: Flamme
- 38.: Rückschlagventil
- 39.: Ventil

## Patentansprüche

1. Mehrstoffbrenner, mit einer Zuführung (4) für einen Primärbrennstoff und einer Zuführung für ein primäres Oxidationsmittel (3) sowie wenigstens einer Sekundärbrennstoffzuführung (7, 8, 9, 10), die in einen Ofenraum (14) ausmünden, und mit einer in wenigstens einer Sekundärbrennstoffzuführung (7) für einen stückigen oder pulverförmigen Brennstoff, der mit Hilfe eines Fördermediums durch die Sekundärbrennstoffzuführung gefördert und am Brennermund in den Ofenraum ausgetragen wird, angeordneten, an eine Sauerstoffzuleitung (17) angeschlossenen Mischeinrichtung (18) zum Einmischen eines sauerstoffreichen Gases in den durch die Sekundärbrennstoffzuführung (7, 8, 9, 10) geförderten Sekundärbrennstoffstrom, worin die Mischeinrichtung (18) einen von einer Vielzahl von Gasaustrittsöffnungen (33) durchbrochenen, perforierten Wandabschnitt (32) der Sekundärbrennstoffzuführung (7) umfasst, welche Gasaustrittsöffnungen (33) über einen Gasverteiler mit der Sauerstoffzuleitung (17) strömungsverbunden sind.

2. Mehrstoffbrenner nach Anspruch 1, **dadurch gekennzeichnet, dass** die Mischeinrichtung (18) ein mit einem Anschluss für die Sauerstoffleitung (17) ausgerüstetes doppelwandig ausgeführtes Rohrstück (19) der Sekundärbrennstoffzuführung (7) umfasst, dessen innere Wand (23) eine dem Innendurchmesser der Sekundärbrennstoffzuführung (7) angepassten Innendurchmesser aufweist und der in seiner geodätisch oberen Hälfte einen perforierten Wandabschnitt (32) mit einer Vielzahl von vorzugsweise in gleichen Abständen voneinander angeordneten Gasaustrittsöffnungen (33) ausgerüstet ist.

3. Mehrstoffbrenner nach Anspruch 1 oder 2, **dadurch gekennzeichnet, dass** wenigstens 20, bevorzugt wenigstens 40 Gasaustrittsöffnungen (33) in der Wandung der Sekundärbrennstoffzuführung (7) vorgesehen sind.

4. Mehrstoffbrenner nach einem der vorhergehenden Ansprüche, **dadurch gekennzeichnet, dass** an der Mischeinrichtung (18) eine Inertgaszuleitung (31) zum Einleiten eines Inertgases in die Sekundärbrennstoffzuführung (7) angeschlossen ist.

5. Mehrstoffbrenner nach einem der vorhergehenden Ansprüche, **dadurch gekennzeichnet, dass** die Sauerstoffleitung (17) (31) mit einem Rückschlagventil ausgerüstet ist.

6. Mehrstoffbrenner nach einem der vorhergehenden Ansprüche, **dadurch gekennzeichnet, dass** in der Sekundärbrennstoffzuführung (7), stromab zur Mischeinrichtung (18), eine Einrichtung zur Temperaturerfassung vorgesehen ist und in der Sauerstoffzuführung (17) und/oder der Sekundärbrennstoffzuführung (7) Ventile angeordnet sind, und die Einrichtung zur Temperaturerfassung und die Ventile mit einer Steuereinheit datenverbunden sind.

7. Mehrstoffbrenner nach einem der vorhergehenden Ansprüche, **dadurch gekennzeichnet, dass** in der Sekundärbrennstoffzuführung (7), stromab zu dem die Gasaustrittsöffnungen (33) aufweisenden perforierten Wandabschnitt (32), eine Mischstrecke besteht, deren Länge zwischen dem Vierzigfachen und dem Hundertfachen des Durchmessers der Sekundärbrennstoffzuführung (7) beträgt.

8. Verfahren zum Beheizen eines Ofenraums, bei dem ein Strom eines primären Oxidationsmittels und ein Primärbrennstoffstrom sowie wenigstens ein Sekundärbrennstoffstrom über eine Sekundärbrennstoffzuführung (7, 8, 9, 10) in einen Ofenraum (14) eingetragen und dort in einer primären Flamme (21) verbrannt werden, wobei der durch wenigstens eine Sekundärbrennstoffzuführung (7) geleitete Sekundärbrennstoffstrom vor seiner Zuführung in den Ofenraum (14) mit einem sauerstoffreichen Gas beaufschlagt wird, worin als Sekundärbrennstoff ein stückiger oder pulverförmiger Brennstoff zum Einsatz kommt, der mit Hilfe eines Fördermediums durch die Sekundärbrennstoffzuführung gefördert und am Brennermund in den Ofenraum ausgetragen wird, und das sauerstoffreiche Gas über eine Vielzahl von Gasaustrittsöffnungen (33), die in einem perforierten Wandabschnitt (32) der Sekundärbrennstoffzuführung (7) angeordnet sind, gleichmäßig in den Sekundärbrennstoffstrom eingetragen wird.

9. Verfahren nach Anspruch 8, **dadurch gekennzeichnet, dass** das sauerstoffreiche Gas mit einem Überdruck zwischen 50 mbar und 200 mbar gegenüber dem Druck in der Sekundärbrennstoffzuführung (7) in den Sekundärbrennstoffstrom eingetragen wird.

10. Verfahren nach Anspruch 8 oder 9, **dadurch gekennzeichnet, dass** als Sekundärbrennstoff in der Sekundärbrennstoffzuführung (7) granulierte Kunststoffabfälle, Spuckstoffe, getrocknete hoch- und niederkalorische biologische Abfälle, Klärschlamm und/oder Tiermehl zum Einsatz kommen.

11. Verfahren nach einem der Ansprüche 8 bis 10, **dadurch gekennzeichnet, dass** als Fördermedium Luft zum Einsatz kommt.

## Claims

1. Multi-fuel burner having a feed (4) for a primary fuel and having a feed for a primary oxidizing agent (3) and also having at least one secondary fuel feed (7, 8, 9, 10), which open out into a furnace chamber (14), and having a mixing device (18) which is arranged in at least one secondary fuel feed (7) for a fuel in lump form or powder form, said fuel, with the aid of a delivery medium, being delivered through the secondary fuel feed and discharged into the furnace chamber at the burner mouth, and which is connected to an oxygen supply line (17) and which serves for mixing an oxygen-rich gas into the secondary fuel stream delivered through the secondary fuel feed (7, 8, 9, 10),
wherein
the mixing device (18) comprises a perforated wall section (32), interrupted by a multiplicity of gas outlet openings (33), of the secondary fuel feed (7), which gas outlet openings (33) are flow-connected to the oxygen supply line (17) via a gas distributor.

2. Multi-fuel burner according to Claim 1, **characterized in that** the mixing device (18) comprises a tube piece (19), provided with a port for the oxygen line (17) and of double-walled form, of the secondary fuel feed (7), the inner wall (23) of which tube piece has an inner diameter matched to the inner diameter of the secondary fuel feed (7) and is, in its geodetically upper half, provided with a perforated wall section (32) having a multiplicity of gas outlet openings (33) which are preferably arranged equally spaced apart from one another.

3. Multi-fuel burner according to Claim 1 or 2, **characterized in that** at least 20, preferably at least 40, gas outlet openings (33) are provided in the wall of the secondary fuel feed (7).

4. Multi-fuel burner according to one of the preceding claims, **characterized in that** an inertgas supply line (31) for introducing an inert gas into the secondary fuel feed (7) is connected to the mixing device (18).

5. Multi-fuel burner according to one of the preceding claims, **characterized in that** the oxygen line (17) (31) is equipped with a check valve.

6. Multi-fuel burner according to one of the preceding claims, **characterized in that** a device for temperature detection is provided in the secondary fuel feed (7) downstream of the mixing device (18) and valves are arranged in the oxygen feed (17) and/or the secondary fuel feed (7), and the device for temperature detection and the valves are data-connected to a control unit.

7. Multi-fuel burner according to one of the preceding claims, **characterized in that**, in the secondary fuel feed (7) downstream of the perforated wall section (32) having the gas outlet openings (33), there is a mixing path whose length is between forty times and one hundred times the diameter of the secondary fuel feed (7).

8. Method for heating a furnace chamber, in which there are introduced into a furnace chamber (14) a stream of a primary oxidizing agent and a primary fuel stream and also at least one secondary fuel stream via a secondary fuel feed (7, 8, 9, 10), which streams are combusted in said chamber in a primary flame (21), wherein the secondary fuel stream guided through at least one secondary fuel feed (7) is charged with an oxygen-rich gas prior to being fed into the furnace chamber (14), wherein,
as a secondary fuel, use is made of a fuel in lump form or powder form which, with the aid of a delivery medium, is delivered through the secondary fuel feed and discharged into the furnace chamber at the burner mouth, and the oxygen-rich gas is introduced into the secondary fuel stream in a uniform manner via a multiplicity of gas outlet openings (33) which are arranged in a perforated wall section (32) of the secondary fuel feed (7).

9. Method according to Claim 8, **characterized in that** the oxygen-rich gas is introduced into the secondary fuel stream at a positive pressure of between 50 mbar and 200 mbar in relation to the pressure in the secondary fuel feed (7).

10. Method according to Claim 8 or 9, **characterized in that** use is made of granulated plastic waste, reject materials, dried high- and low-calorific biological waste, sewage sludge and/or animal meal as a secondary fuel in the secondary fuel feed (7) .

11. Method according to one of Claims 8 to 10, **characterized in that** use is made of air as a delivery medium.

## Revendications

1. Brûleur multi-combustibles, avec une arrivée (4) pour un combustible primaire et une arrivée pour un agent oxydant primaire (3) ainsi qu'au moins une arrivée de combustible secondaire (7, 8, 9, 10), qui débouchent dans une chambre de four (14), et avec un dispositif de mélange (18) disposé dans au moins une arrivée de combustible secondaire (7) pour un combustible fragmenté ou pulvérulent, qui est transporté à l'aide d'un milieu de transport à travers l'arrivée de combustible secondaire et qui est déchargé à l'embouchure du brûleur dans la chambre de four, et raccordé à une conduite d'arrivée d'oxygène (17), pour le mélange d'un gaz riche en oxygène dans le courant de combustible secondaire transporté à travers l'arrivée de combustible secondaire (7, 8, 9, 10), dans lequel le dispositif de mélange (18) comprend une partie de paroi perforée (32), percée d'une multiplicité d'ouvertures de sortie de gaz (33), de l'arrivée de combustible secondaire (7), lesdites ouvertures de sortie de gaz (33) étant raccordées en écoulement à la conduite d'arrivée d'oxygène (17) par un répartiteur de gaz.

2. Brûleur multi-combustibles selon la revendication 1, **caractérisé en ce que** le dispositif de mélange (18) comprend une pièce tubulaire (19) de l'arrivée de combustible secondaire (7), réalisée à double paroi et équipée d'un raccord pour la conduite d'oxygène (17), dont la paroi intérieure (23) présente un diamètre intérieur adapté au diamètre intérieur de l'arrivée de combustible secondaire (7) et la partie de paroi perforée (32) est dotée dans sa moitié géodésiquement supérieure d'une multiplicité d'ouvertures de sortie de gaz (33) de préférence disposées à égales distances l'une de l'autre.

3. Brûleur multi-combustibles selon la revendication 1 ou 2, **caractérisé en ce qu'**il est prévu au moins 20, de préférence au moins 40 ouvertures de sortie de gaz (33) dans la paroi de l'arrivée de combustible secondaire (7).

4. Brûleur multi-combustibles selon l'une quelconque des revendications précédentes, **caractérisé en ce qu'**une conduite d'arrivée de gaz inerte (31) est raccordée au dispositif de mélange (18) pour l'introduction d'un gaz inerte dans l'arrivée de combustible secondaire (7).

5. Brûleur multi-combustibles selon l'une quelconque des revendications précédentes, **caractérisé en ce que** la conduite d'oxygène (17) (31) est équipée d'un clapet anti-retour.

6. Brûleur multi-combustibles selon l'une quelconque des revendications précédentes, **caractérisé en ce qu'**il est prévu un dispositif de mesure de la température dans l'arrivée de combustible secondaire (7), en aval du dispositif de mélange (18), et des soupapes sont disposées dans l'arrivée d'oxygène (17) et/ou dans l'arrivée de combustible secondaire (7), et le dispositif de mesure de la température et les soupapes sont en liaison de transmission de données avec une unité de commande.

7. Brûleur multi-combustibles selon l'une quelconque des revendications précédentes, **caractérisé en ce qu'**il existe dans l'arrivée de combustible secondaire (7), en aval de la partie de paroi perforée (32) présentant les ouvertures de sortie de gaz (33), une section de mélange dont la longueur vaut entre quarante fois et cent fois le diamètre de l'arrivée de combustible secondaire (7).

8. Procédé de chauffage d'une chambre de four, dans lequel on introduit un courant d'un agent oxydant primaire et un courant de combustible primaire ainsi qu'au moins un courant de combustible secondaire par une arrivée de combustible secondaire (7, 8, 9, 10) dans une chambre de four (14) et on les y brûle dans une flamme primaire (21), dans lequel on combine le courant de combustible secondaire conduit par ladite au moins une arrivée de combustible secondaire (7) avec un gaz enrichi en oxygène avant son entrée dans la chambre de four,
dans lequel on utilise comme combustible secondaire un combustible fragmenté ou pulvérulent, qui est transporté à l'aide d'un milieu de transport à travers l'arrivée de combustible secondaire et on le décharge à l'embouchure du brûleur dans la chambre de four, et on introduit le gaz riche en oxygène par une multiplicité d'ouvertures de sortie de gaz (33), qui sont disposées dans une partie de paroi perforée (32) de l'arrivée de combustible secondaire (7), uniformément dans le courant de combustible secondaire.

9. Procédé selon la revendication 8, **caractérisé en ce que** l'on introduit le gaz riche en oxygène dans le courant de combustible secondaire avec une surpression comprise entre 50 mbar et 200 mbar par rapport à la pression dans l'arrivée de combustible secondaire (7).

10. Procédé selon la revendication 8 ou 9, **caractérisé en ce que** l'on utilise comme combustible secondaire dans l'arrivée de combustible secondaire (7) des déchets de matière plastique granulés, des boues de papeterie, des déchets biologiques séchés à haute ou basse valeur énergétique, des boues d'épuration et/ou des farines animales.

11. Procédé selon l'une quelconque des revendications 8 à 10, **caractérisé en ce que** l'on utilise de l'air comme milieu de transport.
